# EUROPÄISCHE PATENTSCHRIFT

(11) **EP 1 617 274 B1**
(45) Veröffentlichungstag und Bekanntmachung des Hinweises auf die Patenterteilung: **11.07.2007**
(21) Anmeldenummer: 04023508.7
(22) Anmeldetag: 01.10.2004
(51) Int. Cl.: G02B 21/10, G02B 21/00, G02B 21/02

(54) **Anordnung zur mikroskopischen Beobachtung und/oder Detektion in einem Lichtrastermikroskop mit linienförmiger Abtastung und Verwendung**
System for the microscopic observation and/or detection in a light scanning microscope with linear illumination and use
Système pour observation microscopique et/ou détection dans un microscope à balayage avec illumination linéaire et utilisation

(30) Priorität: 16.07.2004 DE 102004034958
(43) Veröffentlichungstag der Anmeldung: 18.01.2006
(73) Patentinhaber: CARL ZEISS JENA GmbH, 07745 Jena (DE)
(72) Erfinder: Wolleschensky, Ralf, 99510 Apolda (DE)

(56) Entgegenhaltungen:
- DE-A- 10 257 237
- DE-A1- 3 409 657
- DE-A1- 19 630 322
- US-A- 4 626 079
- US-A- 4 634 234
- PATENT ABSTRACTS OF JAPAN Bd. 010, Nr. 080 (P-441), 29. März 1986 (1986-03-29) & JP 60 217325 A (NIHON KOUGAKU KOGYO KK), 30. Oktober 1985 (1985-10-30)
- PATENT ABSTRACTS OF JAPAN Bd. 009, Nr. 203 (P-381), 21. August 1985 (1985-08-21) & JP 60 067916 A (HITACHI SEISAKUSHO KK), 18. April 1985 (1985-04-18)
- "OPTIMUM DARK FIELD ILLUMINATION FOR COORDINATE MEASUREMENTS ON WAFERS" IBM TECHNICAL DISCLOSURE BULLETIN, IBM CORP. NEW YORK, US, Bd. 32, Nr. 8B, Januar 1990 (1990-01), Seiten 422-425, XP000082130 ISSN: 0018-8689
- LINDEK S. ET AL: 'Single-lens theta microscopy - a new implementation of confocal theta microscopy' JOURNAL OF MICROSCOPY Bd. 188, Nr. 3, Dezember 1997, Seiten 280 - 284
- SWOGER J. ET AL: 'A confocal fiber-coupled single-lens theta microscope' REVIEW OF SCIENTIFIC INSTRUMENTS Bd. 69, Nr. 8, August 1998, Seiten 2956 - 2963
- LINDEK S. ET AL: 'Single-lens theta microscopy: resolution, efficiency and working distance' JOURNAL OF MODERN OPTICS Bd. 46, Nr. 5, 1999, Seiten 843 - 858, XP009056034
- HAAR F.-M. ET AL: 'Developments abd Applications of Confocal Theta Microscopy' SPIE CONFERENCE ON THREE-DIMENSIONAL AND MULTIDIMENSIONAL MICROSCOPY Bd. 3605, Januar 1999, Seiten 48 - 54

## Beschreibung

Stelzer u.a. beschreiben eine Weiterentwicklung der sogenannten " Theta Mikroskopie" (Lindek, et at.; Journal of modern optics, 1999, vol. 46, no. 5, 843-858) bei der die Detektion in einem Winkel von 90 Grad zur Beleuchtung steht, die sogenannte "SPIM" ( selectice plane illumination microscope) (http://www.focusonmicroscopy.org/2004/abstracts/091 Stelzer.pdf).

Weitere Entwicklungen zur Theta-Mikroskopie sind in den folgenden Veröffentlichungen zu finden:
J. Swoger et al., "A confocal fiber-coupled single-lens theta microscope", Review of Scientific Instruments, Vol. 69, Nr. 8, 2956-2963 (1998);
S. Lindek et al., "Single-lens theta microscopy: resolution, efficiency and working distance", Journal of Modern Optics, Vol. 46, Nr. 5, 843-858 (1999);
F.-M. Haar et al., "Developments and Applications of Confocal Theta Microscopy", SPIE Conference on Three-Dimensional and Multidimensional Microscopy, Vol. 3605, 48-54 (1999).

Die Erfindung die im Anspruch 1 definiert ist, und Ihre Vorteile werden nachstehend näher erläutert :

Abweichend vom bekannten Theta Aufbau erfolgt vorteilhaft hier eine Einspiegelung am Rand außerhalb des eigentlichen Beobachtungsobjektives , beispielsweise über abbildende Spiegel mit geringer numerischer Apertur, der mechanisch Teil des Objektives ist, um eine sehr homogene Z Auflösung entlang einer erzeugten Linie oder Fläche zu erzielen.

Nach einer Lichtverzweigung (Teiler) zur parallelen Laserbeleuchtung von mehreren Seiten gelangen vorteilhaft Parallelstrahlen über einen Hauptfarbteiler, der auch wie in DE10257237 ausgebildet sein kann und eine Scanoptik auf die Probe.

In der Probe wird mit geringer numerischer Apertur von mindestens einer Seite auf einen Punkt fokussiert, es entsteht dadurch ein sehr flacher Lichtkegel, der im Innern der Probe quasi gleichverteilt ist (konstante Einschnürung).

Die Dicke der Linie oder Fläche ist durch die Brennweite/ numerische Apertur einstellbar.

Von oben durch das Objektiv erfolgt eine Betrachtung (Detektion) der beleuchteten Punkte entlang dieses Lichtkegels mit einem Zeilen- oder Flächendetektor Die Tiefenauflösung wird durch die Brennweite/ numerische Apertur der Einspiegelung von der Seite vorgegeben. Bei einem Linienscanner kann sie zusätzlich durch eine konfokale Schlitzblende, die sich vor dem Zeilendetektor befindet, eingestellt werden.

Der Strahlteiler ist vorteilhaft in der Objektivpupille angeordnet (des Beobachtungsobjektivs) und weist am Rand zwei Punkte oder Striche auf, die zur Reflektion der quasiparallelen Lichtbündel in Richtung des Objektivesdienen. Ansonsten ist er für Probenlicht durchlässig ausgebildet.

Eine Umkehrung (Beleuchtung über kleine transmittierende Bereiche) und Beobachtung des reflektierten Probenlichtes ist ebenfalls möglich. Bei dem Linienscanner wird eine Zeile detektiert.

Es wird in der Probe eine Linie erzeugt und die Fluoreszenz entlang dieser Linie auf einen Zeilendetektor abgebildet. Durch die Beleuchtung von beiden Seiten werden Abschattungen vermieden. Prinzipiell könnte man auch nur von einer Seite beleuchten. Um diese Linie zu erzeugen, wird durch seitliche Beleuchtung auf den Punkt fokussiert. Daher ist auf dem Spiegel in der Objektivpupille eine kreisrunde Verteilung geringen Querschnitts vorgesehen.

Die im Objekt erzeugte Linie wird durch den in der Pupille (konjugierte Ebene) vorhandenen Scanner über das Objekt bewegt.

Der Scanner descannt die Linie in Richtung der Detektion wieder und bildet sie auf einen Zeilendetektor ab.

Das Rücklicht von der Probe geht durch den Teilspiegel hindurch in Richtung des Zeilendetektors.

Es könnte auch direkt der Randbereich eines reflektierenden Streifens unter Beleuchtung mit zwei Punkten verwendet werden.

Es würde dabei etwas Effizienz durch den durchgehenden Streifen bei der SPIM Anwendung verloren gehen. Weiterhin müßte das Objektiv bei der Liniendetektion gegen das oben beschriebene ausgewechselt werden.

Im Weitfeld erzeugen beispielsweise eine Zylinderlinse oder eine andere geeignete Optik und die Spiegel eine Beleuchtungslinie entlang der y-Achse, so dass eine Beobachtungsfläche in der xy-Ebene entsteht.

Hierzu wird in Y-Richtung in die Pupille fokussiert und somit eine Linienbeleuchtung erzeugt.

Das Objektiv weist Reflektoren mindestens im Bereich der Beleuchtung auf. Die Abmessungen sind so bemessen , daß im Weitfeld ein Lichtband übertragen werden kann, wobei diese Ausbildung auch mit Punktstrahlen von der Seite verwendbar ist (Bild zu verschiedenen Zeiten auf unterschiedlichen Bereichen des Spiegels).

Die Spiegel (abbildende Spiegel) fokussieren Parallelstrahlen auf die optische Achse des inneren Objektives. Die rückwärtige Brennebene der Spiegel liegt in der Objektivpupille.

Eine innere Linse dient der Beobachtung (Detektion). Im äußeren Bereich ist keine Optik erforderlich. Nur wenn zur Strahlumlenkung in Richtung der Probe ebene Spiegel vorgesehen sind, ist vorher eine optische Wirkung des äußeren Rings durch entsprechende Optiken mit geringer Apertur erforderlich.

Mit der Wahl der äußeren Brennweite wird die optische Schnittdicke (entlang der optischen Achse des inneren Objektivs) eingestellt (Beeinflussung Strahldurchmesser).

Mit einer Variooptik könnte sie variabel eingestellt werden.

Die Einspiegeloptik kann ringförmig ausgebildet sein d.h. zur rotationssymetrischen Ausleuchtung der Probe von allen Seiten. Diese Anordnung ist insbesondere bei einer Weitfelddetektion vorteilhaft. Bei Verwendung eines Linienscanners erfolgt die Beleuchtung der Probe vorzugsweise mit einem Ringsegment, d.h. aus einer fest vorgegebenen Richtung. Entlang der gebildeten Achse, die senkrecht zur optischen Achse verläuft, kann dies durch Beleuchtung aus einer oder aus zwei entgegengesetzt zueinander laufenden Richtungen erfolgen. Die beiden Beleuchtungsstrahlen bilden vorzugsweise einen gemeinsamen Fokuspunkt in der Probe.

Das Objektiv kann als Immersionsobjektiv ausgebildet sein. Hierbei wird der Raum von der Probe bis zur ersten Linsenfläche einschließlich der Einspiegelungsoptik von der Seite entsprechend immergiert.

Es werden alle Punkte entlang der Linie oder Fläche durch die Probe parallel durch die Zeile oder im Weitfeld erfaßt, ohne die Intensität erhöhen zu müssen. (z.B. Ramananwendung, bei einem Punktscanner würde die Probe durch die volle Leistung auf jedem Punkt bis über die Zerstörungsgrenze belastet und somit aufgeheizt). Soll die Probe mit der gleichen Bildrate ausgelesen werden, so ist auch eine Senkung der Leistung denkbar. Durch die Parallelisierung der Probenmessung kann hierzu die Integrationszeit entsprechend erhöht werden, so dass das gemessene Signal nach Ablauf der längeren Integrationszeit konstant ist.

Der Energieeintrag zur Erzeugung des gleichen Signales pro Probenvolumen ist identisch dem eines regulären LSM Punktscanners, da die Einstrahlrichtung in der Ebene des zu detektierenden optischen Schnittes liegt.

Es bestehen keine höheren Anforderungen an die Lichtquellen - aber eine volle Parallelisierung kann genutzt werden.

Es ist kein erhöhter Energieeintrag zur Erzielung des gleichen SNR wie in einem Linienscanner erforderlich und damit ensteht eine geringere Probenbelastung.

Es entsteht die Möglichkeit der Untersuchung von schwachen Probenwechselwirkungen wie z.B. Raman Effekten.

Es ist keine spezielle Probenpräparierung nötig

Besonders vorteilhaft kann die Erfindung an einen Linienscanner adaptiert werden, unter Nutzung des Scanners der die Linie über die Probe scannt und unter Nutzung der Elemente zur Einblendung der Beleuchtung bzw. Ausblendung der Detektion (Strahlteilerspiegel), wobei insbesondere vorteilhaft Bereiche eines nach DE10257237 ausgebildeten Strahlteilers genutzt werden können.

Ein Ansatz des erfindungsgemäßen Objektives in einer geeigneten Pupille ist vorteilhaft möglich.

Nachfolgend erfolgt eine weitere Beschreibung anhand der Zeichnungen:

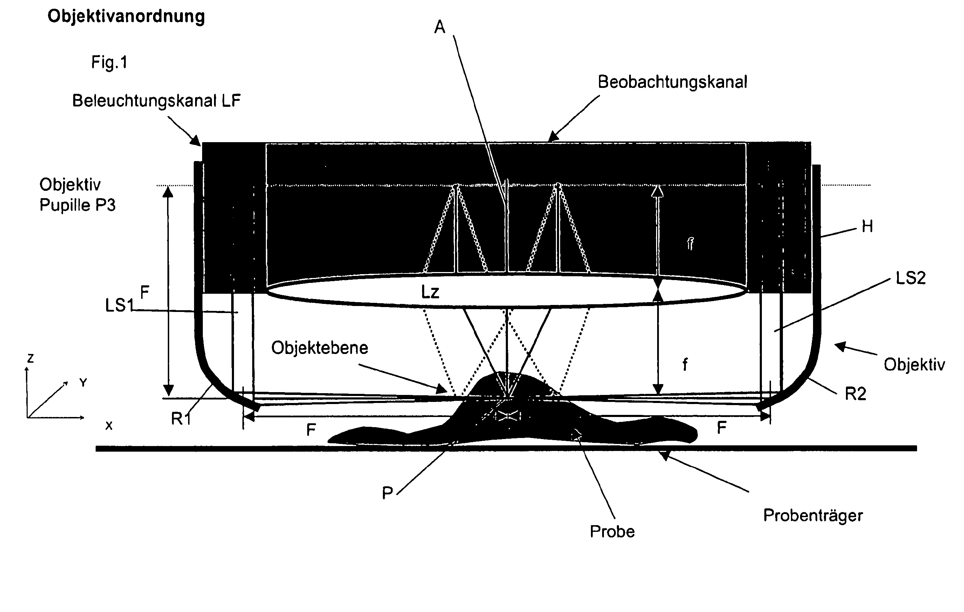

In Fig. 1 ist eine Objektivanordnung dargestellt, die aus einer zentralen Linseneinheit Lz besteht, bei der es sich um ein übliches Beobachtungsobjektiv eines Mikroskopes handeln kann.

In einem Gehäuse H sind außerhalb der Linseneinheit Lz Lichtführungen LF vorgesehen, in denen parallele Beleuchtungsstrahlen Ls1, Ls2 in Richtung zur Probe zunächst parallel zur optischen Achse A der Beobachtung in Lz verlaufen. Die Beleuchtungsstrahlen Ls1, Ls2 treffen auf am Gehäuse H angebrachte Reflektoren R1, R2, die abbildende Spiegel mit geringer Apertur sein können und die Beleuchtungsstrahlen in Richtung senkrecht zur optischen Achse der Beobachtung in einem Punkt Pin der optischen Achse des Objektives Lz fokussieren. R1,R2 können auch plane reflektierende Spiegel sein und in den Lichtführungen LF können dann Abbildungselemente mit geringer Apertur vorgesehen sein, wodurch R1,R2 nur zur Ablenkung in Richtung der Probe dienen und der Fokus in die Probe durch die Abbildungselemente erzeugt wird.

Durch die geringe Apertur verläuft die Taille der Beleuchtung im Bereich der Probe nahezu parallel und erzeugt in der Probe eine dünne Beleuchtungslinie, die in die Objektivpupille P3 abgebildet wird.

Objektivpupille P3, Objektiv Lz und der Probenfokus P befinden sich hier in einer 2f Anordnung, d.h. jeweils im Abstand der einfachen Brennweite voneinander. Hierdurch kann das Objektiv zum telezentrischen Scannen beispielsweise einer Beleuchtungslinie in der Probe eingesetzt werden.

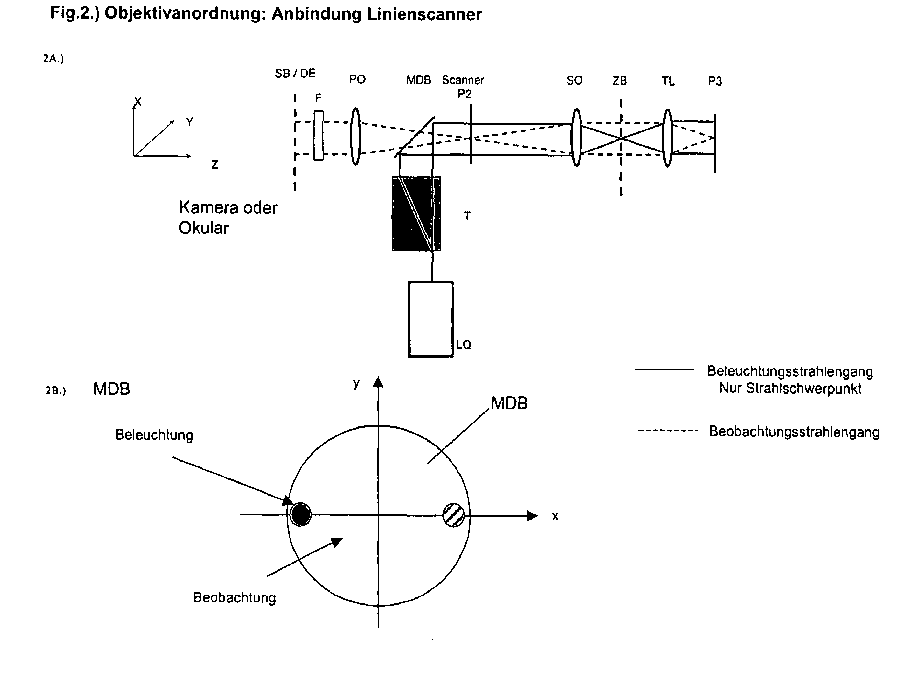

In Fig. 2a, die an der Objektivpupille P3 ansetzt, ist einer Lichtquelle LQ ein Strahlaufteiler T nachgeordnet, der zwei parallele Teilstrahlen Ls1, Ls2 erzeugt, die über einen in einer konjugierten Ebene der Objektivpupille liegenden Strahlteiler, der an seinem Rand gegenüberliegende kreisförmige reflektierende Teilabschnitte aufweist (Abb.2b), reflektiert und über einen Scanner P2 zur Bewegung der Beleuchtungsstrahlen über die Probe in einer Richtung , eine Scanoptik SO und eine Tubuslinse zur Übertragung eines Zwischenbildes ZB auf die Objektivpupille P3 parallel übertragen werden.

Vorteilhaft erfolgt über die Pupille P3 der Ansatz des erfindungsgemäßen Objektives an den Strahlengang eines Linienscanners, der einen entsprechend ausgebildeten Strahlteiler , wie in DE10257237 A21 beschrieben, schon aufweist und dessen transmittierende oder reflektierende Flächen genutzt werden können.

Über den Scanner (in der Pupille P2) des Linienscanners wird die hier beschriebene Beleuchtungslinie durch die Probe bewegt.

Der Beobachtungsstrahlengang ist gestrichelt, der Beleuchtungsstrahlengang durchgehend gezeichnet. Das Bild der Probe im Zwischenbild ZB wird über Tubuslinse, Scanoptik, Scanner descannt und transmittierend durch die für die Probenstrahlung wirksame Fläche des Strahlteilers MDB (außer den kreisförmigen reflektierenden Stellen) mittels einer Pinholeoptik PO auf eine (hier optionale) Spaltblende SB vor einem Zeilendetektor abgebildet.

In Fig.3a ist der Querschnitt der Objektivpupille am MDB mit den Beleuchtungskanälen BK und der wirksamen Fläche für die Beobachtung FB dargestellt.

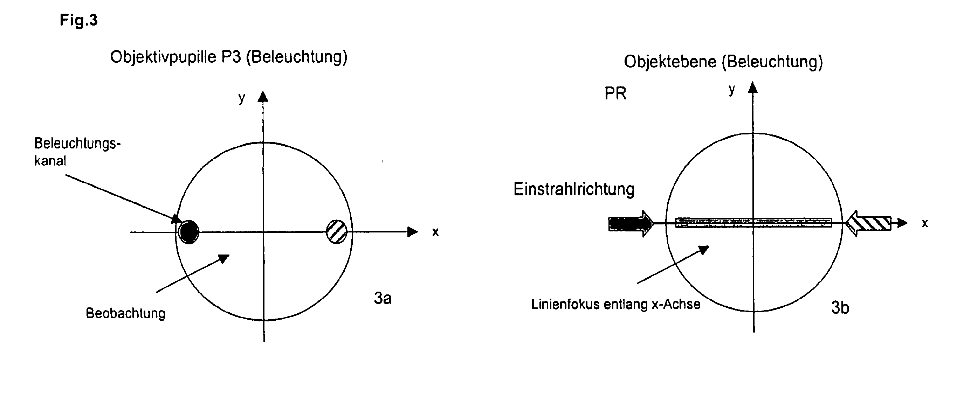

In Fig.3b ist die beleuchtete Linie L in der Objektebene dargestellt, auf die mit dem Objektiv fokussiert wird und die mittels der Detektion erfaßt wird. Die Dicke der Linie wird eingestellt, indem die wirksame numerische Apertur NA der seitlichen Optik, die entlang der Einstrahlrichtung in die Probe fokussiert variiert wird. Wird diese NA verringert, so erhöht sich entsprechend die Linienbreite. Die Manipulation der numerischen Apertur kann beispielsweise auch durch eine nicht dargestellte variable Ringblende in der Pupille, angeordnet um den Beleuchtungskanal, erfolgen. Durch Bewegung des Scanners P senkrecht zur Längsrichtung (X Achse) wird die Linie auf der Probe senkrecht in Y - Richtung verschoben.

In Fig. 4a ist die Anordnung für Weitfeldbeleuchtung dargestellt. Hier kann ein Teiler zur Beleuchtung der Probe aus zwei Einstrahlrichtungen verwendet werden.

In Fig. 4b ist die Ebene der Objektivpupille am Strahlteiler MDB bei Weitfeldbeleuchtung dargestellt.

Dieser weist vorteilhaft zwei strichförmige gegenüberliegende transmittierende Bereiche B1, B2 am Außenrand auf , die jeweils einen linienförmigen Bereich der Beleuchtung (gestrichelt) in Richtung des Außenbereiches des Objektives übertragen . Diese Bereiche werden mit den Reflektoren in Richtung der Probe mit geringer Apertur abgebildet und bilden einen quasiparallelen flächigen Lichtbereich geringer Dicke durch die Probe. Die Einstellung der Dicke erfolgt wiederum durch eine nicht dargestellte Blende in der Pupille, die die Pupille des Beleuchtungskanals entlang der x-Achse am Ort der Pupille einschnürt.

Das erfindungsgemäße Objektiv wird hier vorteilhaft über eine Pupille P3 wie in Fig.2 an den Strahlengang eines Linienscanners angeschlossen.

Die Beleuchtung wird durch eine Zylinderlinse L in y-Richtung fokussiert. Im Beleuchtungsstrahlengang kann sich optional ein Aufteiler T (z.B. doppelbrechendes Medium) zur Erzeugung 2 Teilstrahlen befinden.

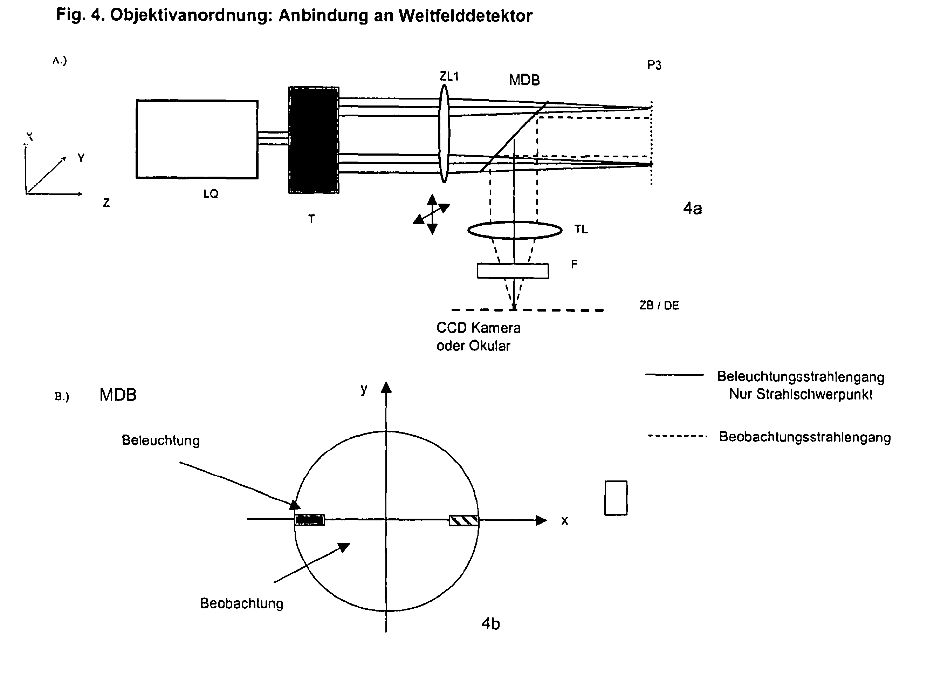

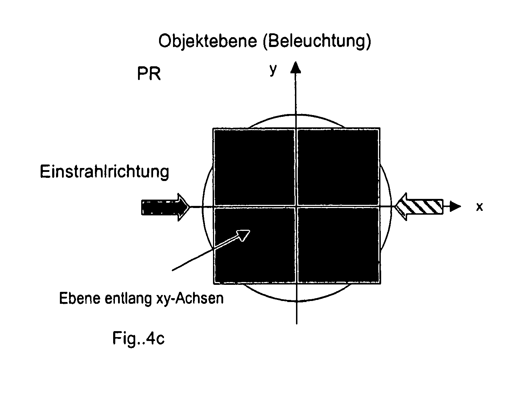

Fig.4c zeigt die aufgespannte Lichtfläche in der Probenebene (Brennebene des Objektives)

Das Probenlicht (gestrichelt)gelangt über den Strahlteiler MDB (reflektierend) in Richtung eines Flächendetektors DEF. Eine Powell Asphäre kann optional vor der Zylinderoptik ZL1 in Abb. 4 zur Homogenisierung der Ausleuchtung entlang der y-Achse eingesetzt werden.

Die beschriebene Erfindung stellt eine bedeutende Ausweitung der Anwendungsmöglichkeiten von schnellen konfokalen Laserscanmikroskopen dar. Die Bedeutung einer solchen Weiterentwicklung lässt sich anhand der zellbiologischen Standardliteratur und den dort beschriebenen schnellen zellulären und subzellulären Vorgängen¹ und den eingesetzten Untersuchungsmethoden mit einer Vielzahl von Farbstoffen² ablesen.
Siehe z.B.:
¹B. Alberts et al. (2002): Molecular Biology of the Cell; Garland Science.
^{1,2}G. Karp (2002): Cell and Molecular Biology: Concepts and Experiments; Wiley Text Books.
^{1,2}R. Yuste et al. (2000): Imaging neurons - a laboratory Manual; Cold Spring Harbor Laboratory Press, New York.
²R.P. Haugland (2003): Handbook of fluorescent Probes and research Products, 10th Edition; Molecular Probes Inc. and Molecular Probes Europe BV.

De Erfindung hat insbesondere große Bedeutung für die folgenden Prozesse und Vorgange:

### Entwicklung von Organismen

Die beschriebene Erfindung ist u.a. für die Untersuchung von Entwicklungsprozessen geeignet, die sich vor allem durch dynamische Prozesse im Zehntelsekunden bis hin zum Stundenbereich auszeichnen. Beispielanwendungen auf der Ebene von Zellverbänden und ganzen Organismen sind z.B. hier beschrieben:
■ Abdul-Karim, M.A. et al. beschreiben 2003 in Microvasc. Res., 66:113-125 eine Langzeitanalyse von Blutgefässveränderungen im lebenden Tier, wobei Fluoreszenzbilder in Intervallen über mehrere Tage aufgenommen wurde. Die 3D-Datensätze wurden mit adaptiven Algorithmen ausgewertet, um die Bewegungstrajektorien schematisch darzustellen.
■ Soll, D.R. et al. beschreiben 2003 in Scientific World Journ. 3:827-841 eine softwarebasierte Bewegungsanalyse von mikroskopischen Daten von Kernen und Pseudopodien lebender Zellen in allen 3 Raumdimensionen.
■ Grossmann, R. et al. beschreiben 2002 in Glia, 37:229-240 eine 3D-Analyse der Bewegungen von Mikrogliazellen der Ratte, wobei die Daten über bis zu 10 Stunden aufgenommen wurden. Gleichzeitig kommen nach traumatischer Schädigung auch schnelle Reaktionen der Glia vor, so dass eine hohe Datenrate und entsprechendes Datenvolumen entsteht.

Das betrifft insbesondere folgende Schwerpunkte:
- Analyse lebender Zellen in einer 3D Umgebung, deren Nachbarzellen empfindlich auf Laserbeleuchtung reagieren und die von der Beleuchtung der 3D-ROI geschützt werden müssen;
- Analyse lebender Zellen in einer 3D Umgebung mit Markierungen, die gezielt durch Laserbeleuchtung in 3D gebleicht werden sollen, z.B. FRET-Experimente;
- Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
- Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
- Gezielte Analyse lebender Zellen in einer 3D Umgebung mit Markierungen, die manipulationsbedingte Farbänderungen durch Laserbeleuchtung aufweisen, z.B. paGFP, Kaede;
- Gezielte Analyse lebender Zellen in einer 3D Umgebung mit sehr schwachen Markierungen, die z.B. eine optimale Balance von Konfokalität gegen Detektionsempfindlichkeit erfordern.
- Lebende Zellen in einem 3D-Gewebeverband mit variierenden Mehrfachmarkierungen, z.B. CFP, GFP, YFP, DsRed, HcRed u.ä.
- Lebende Zellen in einem 3D-Gewebeverband mit Markierungen, die funktionsabhängige Farbänderungen aufweisen, z.B. Ca+-Marker
- Lebende Zellen in einem 3D-Gewebeverband mit Markierungen, die entwicklungsbedingte Farbänderungen aufweisen, z.B. transgene Tiere mit GFP
- Lebende Zellen in einem 3D-Gewebeverband mit Markierungen, die manipulationsbedingte Farbänderungen durch Laserbeleuchtung aufweisen, z.B. paGFP, Kaede
- Lebende Zellen in einem 3D-Gewebeverband mit sehr schwachen Markierungen, die eine Einschränkung der Konfokalität zugunsten der Detektionsempfindlichkeit erfordern.
- Letztgenannter Punkt in Kombination mit den Vorangehenden.

## Patentansprüche

1. Lichtrastermikroskop zur Erfassung mindestens eines Probenbereiches mit
- einer Lichtquelle, die einen Beleuchtungsstrahlengang definiert, mit
- mindestens einem Scanner (P) zur scannenden Bewegung einer Beleuchtungslinie durch die Probe, mit
- einem Detektor (DFEF) in einem Detektionsstrahlengang, und mit
- einem Mikroskopobjektiv, das eine Beobachtungsoptik (Lz) zur Betrachtung zumindest teilweise transparenter Proben beinhaltet,
**dadurch gekennzeichnet dass**
- das Mikroskopobjektiv in seinem Gehäuse (H) eine Lichtführung (LF) für mindestens ein Parallelstrahlenbündel (Lsl) der Beleuchtung außerhalb der Beobachtungsoptik (Lz) enthält,
- sowie mindestens ein Reflektor (R1) am Objektiv zur Umlenkung des Strahlbündels vorgesehen ist, um die Probe zumindest von einer Seite in einem Winkel senkrecht zur optischen Achse (A) der Beobachtungsoptik (Lz) zu beleuchten, und dass
- im Detektionsstrahlengang ein ortsauflösender Detektor (DFEF) zur Detektion des Probenbildes vorgesehen ist, wobei
- in der Probe die Beleuchtungslinie senkrecht zur optischen Achse (A) der Beobachtungsoptik erzeugt wird, indem das Parallelstrahlenbündel mit niedrigerer Apertur als die des Mikroskopobjektivs in die Probe fokussiert und
- die Beleuchungslinie mittels des Scanners über das Objekt bewegt wird, wobei
- das Probenlicht in Detektionsrichtung über die Beobachtungsoptik (Lz) und den Scanner (P) auf den ortsauflösenden Detektor (DFEF) abgebildet wird.

2. Lichtrastermikrokop nach Anspruch 1, wobei der Reflektor (R1) ein abbildender Spiegel ist, der das Beleuchtungslicht in Richtung der Probe fokussiert.

3. Lichtrastermikrokop nach Anspruch 1,
wobei der Reflektor (R1) ein ebener Spiegel ist und in der Lichtführung ein Abbildungselement zur Fokussierung vorgesehen ist.

4. Lichtrastermikrokop nach einem der Ansprüche 1-3,
wobei eine Beleuchtung von zwei Seiten mit gemeinsamem Fokuspunkt erfolgt

5. Lichtrastermikroskop nach einem der vorangehenden Ansprüche, wobei
eine Einkopplung des Beleuchtungslichtes über einen Strahlteiler (MDB), vorzugsweise in der Objektivpupille, erfolgt der zur Einkopplung an seinem Umfang gering ausgedehnte transmittierende oder reflektierende Bereiche zur Richtung des Beleuchtungslichtes auf die Probe, ansonsten aber
im wesentlichen auf der restlichen Fläche für das Probenlicht reflektierend oder transmittierend ausgebildet ist.

6. Verfahren zur Erfassung mindestens eines Probenbereiches unter Verwendung eines Lichtrastermikroskopes nach einem der Ansprüche 1-5, zur Untersuchung von schwachen Probenwechselwirkungen, insbesondere Raman - Effekten.

7. Verfahren zur Erfassung mindestens eines Probenbereiches unter Verwendung eines Lichtrastermikroskopes nach einem der Ansprüche 1-5, zur Untersuchung von Entwicklungsprozessen , insbesondere dynamischer Prozesse im Zehntelsekunden bis hin zum Stundenbereich, insbesondere auf der Ebene von Zellverbänden und ganzen Organismen, insbesondere nach mindestens einem der folgenden Punkte:
• Analyse lebender Zellen in einer 3D Umgebung, deren Nachbarzellen empfindlich auf Laserbeleuchtung reagieren und die von der Beleuchtung der 3D-ROI geschützt werden müssen;
• Analyse lebender Zellen in einer 3D Umgebung mit Markierungen, die gezielt durch Laserbeleuchtung in 3D gebleicht werden sollen, z.B. FRET-Experimente;
• Analyse lebender Zellen in einer 3D Umgebung mit Markierungen, die gezielt durch Laserbeleuchtung gebleicht und gleichzeitig auch außerhalb der ROI beobachtet werden sollen, z.B. FRAP- und FLIP-Experimente in 3D;
• Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
• Gezielte Analyse lebender Zellen in einer 3D Umgebung mit Markierungen, die manipulationsbedingte Farbänderungen durch Laserbeleuchtung aufweisen, z.B. paGFP, Kaede;
• Gezielte Analyse lebender Zellen in einer 3D Umgebung mit sehr schwachen Markierungen, die z.B. eine optimale Balance von Konfokalität gegen Detektionsempfindlichkeit erfordern;
• Lebende Zellen in einem 3D-Gewebeverband mit variierenden Mehrfachmarkierungen, z.B. CFP, GFP, YFP, DsRed, HcRed u.ä.;
• Lebende Zellen in einem 3D-Gewebeverband mit Markierungen, die funktionsabhängige Farbänderungen aufweisen, z.B. Ca+-Marker;
• Lebende Zellen in einem 3D-Gewebeverband mit Markierungen, die entwicklungsbedingte Farbänderungen aufweisen, z.B. transgene Tiere mit GFP;
• Lebende Zellen in einem 3D-Gewebeverband mit Markierungen, die manipulationsbedingte Farbänderungen durch Laserbeleuchtung aufweisen, z.B. paGFP, Kaede;
• Lebende Zellen in einem 3D-Gewebeverband mit sehr schwachen Markierungen, die eine Einschränkung der Konfokalität zugunsten der Detektionsempfindlichkeit erfordern.

## Claims

1. Laser scanning microscope for detecting at least one sample region, having
- a light source which defines an illumination beam path, with
- at least one scanner (P) for moving an illumination line in a scanning manner through the sample, with
- a detector (DFEF) in a detection beam path, and with
- a microscope objective which includes viewing optics (Lz) for viewing at least partially transparent samples,
**characterised in that**
- the microscope objective contains in its housing (H) a light guide (LF) for at least one parallel beam bundle (Lsl) of the illumination outside of the viewing optics (Lz),
- and at least one reflector (R1) is provided on the objective for diverting the beam bundle, in order to illuminate the sample at least from one side at an angle perpendicular to the optical axis (A) of the viewing optics (Lz), and that
- in the detection beam path a locally resolving detector (DFEF) is provided for detecting the sample image, wherein
- in the sample the illumination line is generated perpendicular to the optical axis (A) of the viewing optics, **in that** the parallel beam bundle is focussed into the sample with a lower aperture than that of the microscope objective and
- the illumination line is moved by means of the scanner across the object, wherein
- the sample light in the detection direction is imaged via the viewing optics (Lz) and the scanner (P) on to the locally resolving detector (DFEF).

2. Laser scanning microscope as claimed in claim 1, wherein the reflector (R1) is an imaging mirror which focuses the illumination light in the direction of the sample.

3. Laser scanning microscope as claimed in claim 1,
wherein the reflector (R1) is a planar mirror and in the light guide an imaging element is provided for focussing purposes.

4. Laser scanning microscope as claimed in any one of claims 1-3, wherein illumination occurs from two sides with a common focal point.

5. Laser scanning microscope as claimed in any one of the preceding claims, wherein the illumination light is coupled-in via a beam splitter (MDB), preferably in the objective pupil, which beam splitter for coupling-in purposes comprises on its periphery slightly extended transmitting or reflective regions with respect to the direction of the illumination light on to the sample, but otherwise is formed substantially on the remainder of the surface so as to reflect or transmit the sample light.

6. Method of detecting at least one sample region using a laser scanning microscope as claimed in any one of claims 1-5, for the examination of weak sample interactions, in particular Raman effects.

7. Method of detecting at least one sample region using a laser scanning microscope as claimed in any one of claims 1-5, for the examination of development processes, in particular dynamic processes in the range of tenths of a second to several hours, in particular at the level of cell groups and whole organisms, in particular according to at least one of the following points:
• Analysis of live cells in a 3D environment, whose neighbouring cells react sensitively to laser illumination and which must be protected from the illumination of the 3D-ROI;
• Analysis of live cells in a 3D environment with markings which are to be bleached in a targeted manner by laser illumination in 3D, e.g. FRET-experiments;
• Analysis of live cells in a 3D environment with markings which are to be bleached in a targeted manner by laser illumination and at the same time are also to be observed outside the ROI, e.g. FRAP- and FLIP-experiments in 3D;
• Targeted analysis of live cells in a 3D environment with markings and medicines which comprise manipulation-induced changes by laser illumination, e.g. activation of transmitters in 3D;
• Targeted analysis of live cells in a 3D environment with markings which comprise manipulation-induced colour changes by laser illumination, e.g. paGFP, Kaede;
• Targeted analysis of live cells in a 3D environment with very weak markings which require e.g. an optimum balance between confocality and detection sensitivity.
• Live cells in a 3D tissue formation with varying multiple markings, e.g. CFP, GFP, YFP, DsRed, HcRed and the like.
• Live cells in a 3D tissue formation with markings which comprise colour changes which are dependent upon function, e.g. Ca+-markers.
• Live cells in a 3D tissue formation with markings which comprise development-induced colour changes, e.g. transgenic animals with GFP.
• Live cells in a 3D tissue formation with markings which comprise manipulation-induced colour changes by laser illumination, e.g. paGFP, Kaede.
• Live cells in a 3D tissue formation with very weak markings which require a restriction in confocality in favour of detection sensitivity.

## Revendications

1. Microscope à balayage pour l'enregistrement d'au moins une zone d'échantillon comprenant
- une source lumineuse, qui définit un trajet de faisceau d'éclairage, avec
- au moins un scanner (P) pour le déplacement avec balayage d'une ligne d'éclairage à travers l'échantillon, avec
- un détecteur (DFEF) dans un trajet de faisceau de détection, et avec
- un objectif de microscope, qui contient une optique d'observation (Lz) pour la prise en compte d'échantillons au moins partiellement transparents,
**caractérisé en ce que**
- l'objectif du microscope contient dans son boîtier (H) un guide de lumière (LF) pour au moins un faisceau de trajet parallèle (Lsl) de l'éclairage à l'extérieur de l'optique d'observation (Lz),
- et au moins un réflecteur (R1) est prévu sur l'objectif pour la déviation du faisceau de rayon, afin d'éclairer l'échantillon au moins par un côté dans un angle perpendiculaire à l'axe (A) optique de l'optique d'observation (Lz), et **en ce que**
- un détecteur à haute résolution (DFEF) pour la détection de l'image d'échantillon est prévu dans le trajet du faisceau de détection,
- la ligne d'éclairage étant générée dans l'échantillon perpendiculairement à l'axe (A) optique de l'optique d'observation du fait que le faisceau de rayon parallèle est concentré avec une ouverture plus faible que celle de l'objectif du microscope dans l'échantillon et
- la ligne d'éclairage étant déplacée au moyen du scanner au-dessus de l'objet,
- la lumière d'échantillon étant introduite dans la direction de détection au moyen de l'optique d'observation (Lz) et du scanner (P) sur le détecteur à résolution locale (DFEF) .

2. Microscope à balayage selon la revendication 1, le réflecteur (R1) étant un miroir de reproduction qui focalise la lumière d'éclairage en direction de l'échantillon.

3. Microscope à balayage selon la revendication 1,
le réflecteur (R1) étant un miroir plan et un élément de reproduction étant prévu dans le guidage de lumière pour la focalisation.

4. Microscope à balayage selon l'une quelconque des revendications 1 à 3,
un éclairage s'effectuant par les deux côtés avec un foyer commun.

5. Microscope à balayage selon l'une quelconque des revendications précédentes, une injection de la lumière d'éclairage s'effectuant au moyen d'un diviseur de faisceau (MDB), de préférence dans la pupille de l'objectif, qui est conçu pour l'injection de zones transmettrices ou réfléchissantes faiblement étendues sur son pourtour en direction de la lumière d'éclairage sur l'échantillon, mais est conçu par ailleurs réfléchissant ou transmetteur essentiellement sur le reste de la surface pour la lumière d'échantillon.

6. Procédé pour l'enregistrement d'au moins une zone d'échantillon avec l'utilisation d'un microscope à balayage selon l'une quelconque des revendications 1 à 5, pour l'analyse de faibles interactions d'échantillons, en particulier des effets de Raman.

7. Procédé pour l'enregistrement d'au moins une zone d'échantillon avec l'utilisation d'un microscope à balayage selon l'une quelconque des revendications 1 à 5, pour l'étude de processus de développement, en particulier de processus dynamiques de l'ordre du dixième de seconde jusqu'à quelques heures, en particulier sur le plan d'assemblages cellulaires et d'organismes entiers, en particulier selon au moins l'un quelconque des points suivants :
- Analyse de cellules vivantes dans un environnement en trois dimensions, dont les cellules voisines réagissent de façon sensible à l'éclairage du laser et doivent être protégées de l'éclairage des 3D-ROI ;
- Analyse de cellules vivantes dans un environnement en trois dimensions avec des marquages qui doivent être blanchis par un éclairage laser en 3D, par exemple expériences FRET ;
- Analyse de cellules vivantes dans un environnement en trois dimensions avec des marquages qui doivent être blanchis de façon ciblée par éclairage laser et doivent être observés simultanément également à l'extérieur des ROI, par exemple expériences FRAP et FLIP en trois dimensions ;
- Analyse ciblée de cellules vivantes dans un environnement en trois dimensions avec des marquages et des produits pharmaceutiques qui présentent des modifications dues à la manipulation par éclairage laser, par exemple activation de transmetteurs en 3D ;
- Analyse ciblée de cellules vivantes dans un environnement en 3D avec des marquages qui présentent des changements de couleur dus à la manipulation par éclairage laser, par exemple paGFP, Kaede ;
- Analyse ciblée de cellules vivantes dans un environnement en trois dimensions avec de très faibles marquages, qui exigent par exemple un équilibre optimal de la confocalité vis-à-vis de la sensibilité à la détection ;
- Cellules vivantes dans un assemblage de tissu en trois dimensions avec des marquages multiples variables, par exemple CFP, GFP, YFP, DsRed, HcRed, etc. ;
- Cellules vivantes dans un assemblage de tissu en trois dimensions avec des marquages qui présentent des changements de couleur dépendant de la fonction, par exemple marqueur Ca+ ;
- Cellules vivantes dans un assemblage de tissu en trois dimensions avec des marquages qui présentent des changements de couleur dus au développement, par exemple animaux transgènes avec GFP ;
- Cellules vivantes dans un assemblage de tissu en trois dimensions avec des marquages qui présentent des changements de couleur dus à la manipulation par éclairage au laser, par exemple paGFP, Kaede ;
- Cellules vivantes dans un assemblage de tissu en trois dimensions avec des marquages très faibles qui exigent une restriction de la confocalité au profit de la sensibilité à la détection.
